# EUROPEAN PATENT APPLICATION

(11) **EP 2 600 481 A1**
(43) Date of publication of application: **05.06.2013**
(21) Application number: 12194944.0
(22) Date of filing: 30.11.2012
(51) Int. Cl.: H02J 3/38

(54) **Battery free off-grid solar inverter system and control method thereof**

(30) Priority: 02.12.2011 TW 100144350
(71) Applicant: Darfon Electronics Corp., Taoyuan 33341 (TW)
(72) Inventor: Chiang, Chang-Chia, 33341 Taoyuan (TW); Hsiang, Li, 33341 Taoyuan (TW); Ku, Hsiao-Chih, 33341 Taoyuan (TW)
(74) Representative: Becker Kurig Straus

(57) **Abstract**

A battery free off-grid solar inverter system (200) includes an inverter (202) and a controller (204). The inverter (202) is used for converting a direct current (DC) voltage provided by a solar panel (206) into an alternating current (AC) voltage. The inverter (202) has an input terminal, an output terminal, and a control terminal. The input terminal is used for coupling to the solar panel (206) for receiving the DC voltage, and the output terminal is used for coupling the AC voltage to a load (208). The controller (204) is coupled to the control terminal for gradually increasing the AC voltage to gradually decrease the DC voltage when the battery free off-grid solar inverter system (200) is turned on. The controller (204) stops increasing the AC voltage when the DC voltage is lower than a predetermined DC voltage value.

## Description

### Field of the Invention

The present invention relates to a battery free off-grid solar inverter system and a control method thereof according to the pre-characterizing clauses of claims 1 and 4.

### Background of the Invention

In the prior art, when a solar inverter system is coupled to a solar panel, an inverter of the solar inverter system is used for converting a direct current (DC) voltage provided by the solar panel into an alternating current (AC) voltage, where a battery of the solar inverter system is used for storing power generated by the solar panel. When power generated by the solar panel can not satisfy power consumed by a load coupled to the solar inverter system, a controller of the solar inverter system can control the battery to release stored power to satisfy the power consumed by the load and maintain the inverter to operate continuously. Thus, the inverter cannot be turned off when power generated by the solar panel cannot satisfy power consumed by the load.

However, for cost efficiency, the solar inverter system may be requested to be battery free. Therefore, how to design a solar inverter system which is battery free and can operate stably is an important issue for a designer of a solar inverter system.

### Summary of the Invention

This in mind, the present invention aims at providing a battery free off-grid solar inverter system and a control method thereof that can have lower cost and operate stably.

This is achieved by a battery free off-grid solar inverter system and a control method of a battery free off-grid solar inverter system according to claims 1 and 4. The dependent claims pertain to corresponding further developments and improvements.

As will be seen more clearly from the detailed description following below, the claimed battery free off-grid solar inverter system includes an inverter and a controller. The inverter is used for converting a DC voltage provided by a solar panel into an AC voltage. The inverter has an input terminal, an output terminal, and a control terminal, where the input terminal is used for coupling to the solar panel for receiving the DC voltage, and the output terminal is used for coupling the AC voltage to a load. The controller is coupled to the control terminal for gradually increasing the AC voltage to gradually decrease the DC voltage when the battery free off-grid solar inverter system is turned on. The controller stops increasing the AC voltage when the DC voltage is lower than a predetermined DC voltage value.

### Brief Description of the Drawings

In the following, the invention is further illustrated by way of example, taking reference to the accompanying drawings thereof:
FIG. 1 is a diagram illustrating a solar inverter system,
FIG. 2 is a diagram illustrating a battery free off-grid solar inverter system according to an embodiment,
FIG. 3 is a diagram illustrating a relationship between a DC voltage and a DC current outputted by the battery free off-grid solar inverter system, and
FIG. 4 is a flowchart illustrating a control method of a battery free off-grid solar inverter system according to another embodiment.

### Detailed Description

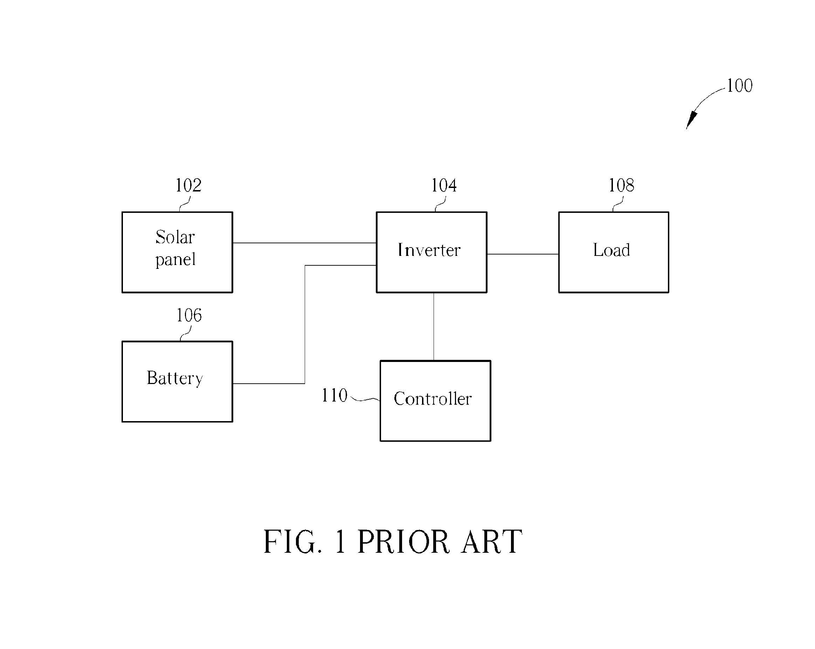

Please refer to FIG. 1. FIG. 1 is a diagram illustrating a solar inverter system 100. As shown in FIG. 1, an inverter 104 is coupled to a solar panel 102 and a battery 106, where the battery 106 is used for storing power. When power generated by the solar panel 102 can not satisfy power consumed by a load 108, a controller 110 can control the battery 106 to release stored power to satisfy the power consumed by the load 108 and maintain the inverter 104 to operate continuously. Thus, the inverter 104 cannot be turned off when power generated by the solar panel 102 cannot satisfy power consumed by a load 108.

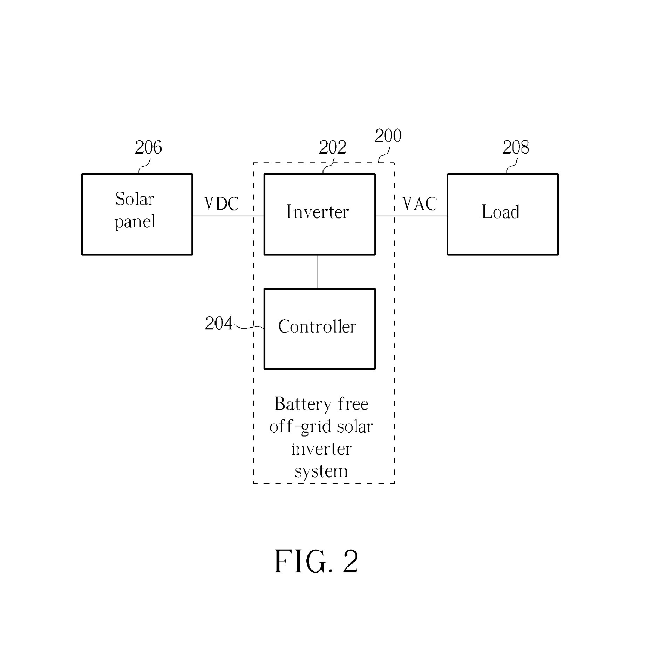

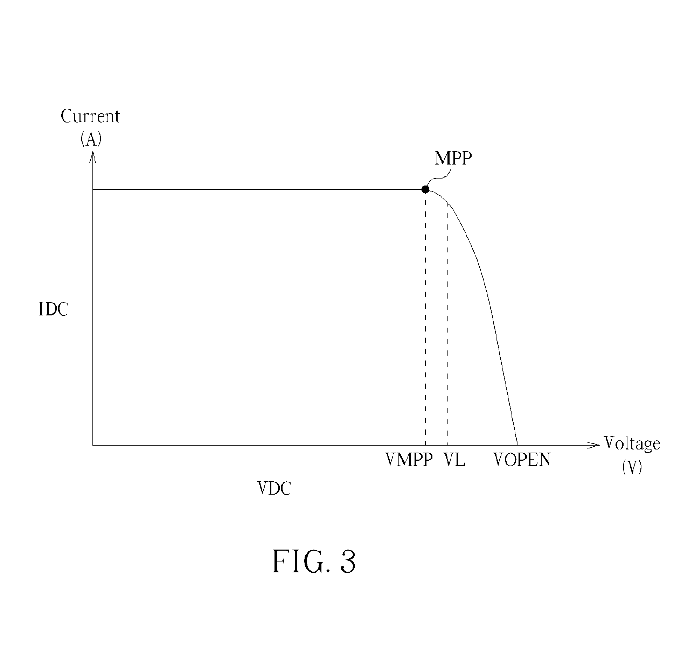

Please refer to FIG. 2 and FIG. 3. FIG. 2 is a diagram illustrating a battery free off-grid solar inverter system 200 according to an embodiment, and FIG. 3 is a diagram illustrating a relationship between a DC voltage VDC and a DC current IDC outputted by the battery free off-grid solar inverter system 200. As shown in FIG. 2 and FIG. 3, the battery free off-grid solar inverter system 200 includes an inverter 202 and a controller 204. The inverter 202 is used for converting the DC voltage VDC provided by a solar panel 206 into an AC voltage VAC. The inverter 202 has an input terminal, an output terminal, and a control terminal, where the input terminal of the inverter 202 is used for coupling to the solar panel 206 for receiving the DC voltage VDC, and the output terminal of the inverter 202 is used for coupling the AC voltage VAC to a load 208. The controller 204 is coupled to the control terminal of the inverter 202 for gradually increasing the AC voltage VAC to make the DC voltage be gradually decreased from an open-circuited voltage VOPEN (e.g. 50V) of the solar panel 206 when the battery free off-grid solar inverter system 200 is turned on. The controller 204 stops increasing the AC voltage VAC when the DC voltage VDC is lower than a predetermined DC voltage value VL (e.g. 40V). A voltage VMPP corresponding to a Maximum Power Point (MPP) of the solar panel 206 is usually 0.75 times the open-circuited voltage VOPEN of the solar panel 206. The predetermined DC voltage value VL is set to be 0.75-0.8 times the open-circuited voltage VOPEN. Thus, the predetermined DC voltage value VL is slightly greater than the voltage VMPP corresponding to the Maximum Power Point (MPP) of the solar panel 206.

As shown in FIG. 2 and FIG. 3, when the battery free off-grid solar inverter system 200 is turned on, the controller 204 starts to gradually increase the AC voltage VAC provided to the load 208 by the inverter 202 from an predetermined AC voltage value (e.g. 20V), and an increment of the AC voltage VAC provided to the load 208 by the inverter 202 is 0.3V per time, where the increment is controlled by the controller 204. But, the present invention is not limited to the controller 204 starting to gradually increase the AC voltage VAC provided to the load 208 by the inverter 202 from 20V, and is also not limited to the increment of the AC voltage VAC provided to the load 208 by the inverter 202 being 0.3V per time. As shown in FIG. 3, because the AC voltage VAC of the output terminal of the inverter 202 controlled by the controller 204 is gradually increased, the DC voltage VDC of the input terminal of the inverter 202 is gradually decreased toward the predetermined DC voltage value VL. When the DC voltage VDC is greater than the predetermined DC voltage value VL, the controller 204 can keep controlling the inverter 202 to increase the AC voltage VAC provided to the load 208; when the DC voltage VDC is lower than the predetermined DC voltage value VL, the controller 204 can control the inverter 202 to stop increasing the AC voltage VAC provided to the load 208, and the controller 204 can make the inverter 202 output a previous or a previous two value of the AC voltage VAC. For example, if the increment of the AC voltage VAC is set to 0.3V per time and the predetermined DC voltage value VL is set to 40V, the controller 204 detects the DC voltage VDC to be lower than the predetermined DC voltage value VL (40V) when the AC voltage VAC is increased to 200.3V, so the controller 204 makes the output terminal of the inverter 202 output a previous value (200V) of the AC voltage VAC or a previous two value (199.7V) of the AC voltage. Therefore, the above mentioned control method can limit output power of the inverter 202 to prevent the output power of the inverter 202 from suddenly exceeding input power of the inverter 202 to avoid turning-off of the inverter 202.

In addition, when power provided by the solar panel 206 within a period of time (e.g. 3 seconds) can not satisfy power consumed by the load 108, the DC voltage VDC is decreased to a predetermined value (e.g. 18V). Meanwhile, the controller 204 can turn off the inverter 202, and turn on the inverter 202 again after a predetermined time (e.g. 1 minute).

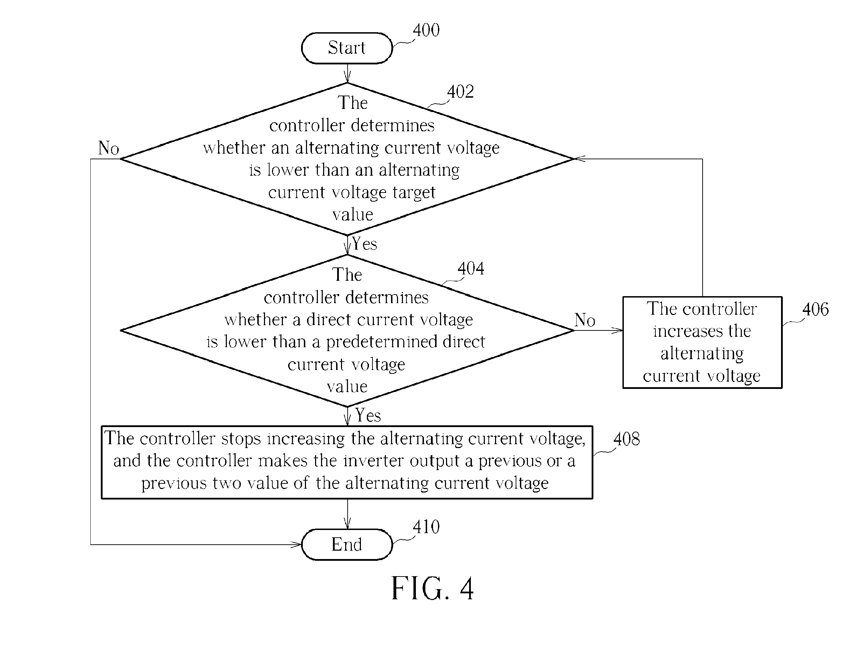

Please refer to FIG. 4, FIG. 2, and FIG. 3. FIG. 4 is a flowchart illustrating a control method of a battery free off-grid solar inverter system according to another embodiment. The method in FIG. 4 is illustrated using the battery free off-grid solar inverter system 200 in FIG. 2. Detailed steps are as follows:

| | |
|---|---|
| Step 400: | Start. |
| Step 402: | The controller 204 determines whether an AC voltage VAC is lower than an AC voltage target value VT; if yes, go to Step 404; if no go to Step 410. |
| Step 404: | The controller 204 determines whether a DC voltage VDC is lower than a predetermined DC voltage value VL; if yes, go to Step 408; |

| | |
|---|---|
| | if no go to Step 406. |
| Step 406: | The controller 204 increases the AC voltage VAC; go to Step 402. |
| Step 408: | The controller 204 stops increasing the AC voltage VAC, and the controller 204 makes the inverter 202 output a previous or a previous two value of the AC voltage VAC. |
| Step 410: | End. |

In Step 402, the AC voltage target value VT can be first set to 110V or 220V according to a specification of the load 208. In Step 406, the controller 204 starts to gradually increase the AC voltage VAC from a predetermined AC voltage value (e.g. 20V), and an increment of the AC voltage VAC can be set to 0.3V-0.8V per time. As shown in FIG. 3, when the AC voltage VAC of the output terminal of the inverter 202 is gradually increased, the DC voltage VDC of the input terminal of the inverter 202 is gradually decreased toward the predetermined DC voltage value VL. In Step 404, when the DC voltage VDC is lower than the predetermined DC voltage value VL, go to Step 408. Meanwhile, the controller 204 can control the inverter 202 to stop increasing the AC voltage VAC, and the controller 204 can make the inverter 202 output the previous or the previous two value of the AC voltage VAC. For example, if the predetermined DC voltage value VL is set to 40V and the increment of the AC voltage VAC is set to 0.3V per time, when the AC voltage VAC is increased to 200.3V, and the controller 204 detects the DC voltage VDC to be 39.5V, because the DC voltage VDC (39.5V) is lower than the predetermined DC voltage value VL (40V), go to Step 408. Thus, the controller 204 controls the inverter 202 to stop increasing the AC voltage VAC, and makes the inverter 202 output a previous value (200V) of the AC voltage VAC or a previous two value (199.7V) of the AC voltage.

To sum up, the battery free off-grid solar inverter system and the control method thereof utilize the controller to control the inverter to provide an AC voltage to the load to make a DC voltage of the input terminal of the inverter be gradually decreased toward a predetermined DC voltage value, where the predetermined DC voltage value is slightly greater than the voltage corresponding to the Maximum Power Point of the solar panel. Therefore, the present invention can reduce cost of the battery free off-grid solar inverter system, ensure that the battery free off-grid solar inverter system cannot be suddenly turned off under a battery-free condition, and increase stability of the battery free off-grid solar inverter system.

## Claims

1. A battery free off-grid solar inverter system (200), the battery free off-grid solar inverter system (200), **characterized by**:
an inverter (202) for converting a direct current (DC) voltage provided by a solar panel (206) into an alternating current (AC) voltage, the inverter (202) having an input terminal, an output terminal, and a control terminal, wherein the input terminal is used for coupling to the solar panel (206) for receiving the DC voltage, and the output terminal is used for coupling the AC voltage to a load (208); and
a controller (204) coupled to the control terminal for gradually increasing the AC voltage to gradually decrease the DC voltage when the battery free off-grid solar inverter system (200) is turned on, wherein the controller (204) stops increasing the AC voltage when the DC voltage is lower than a predetermined DC voltage value.

2. The battery free off-grid solar inverter system (200) of claim 1, further **characterized in that** the predetermined DC voltage value is 0.75-0.8 times an open-circuited voltage of the solar panel (206).

3. The battery free off-grid solar inverter system (200) of claim 1, further **characterized in that** when the DC voltage is lower than a predetermined value, the controller (204) turns off the inverter (202).

4. A control method of a battery free off-grid solar inverter system (200), the battery free off-grid solar inverter system (200) comprising an inverter (202) and a controller (204), wherein the inverter (202) has an input terminal, an output terminal, and a control terminal, the input terminal is coupled to a solar panel (206) for receiving a DC voltage, the output terminal is coupled to a load (208) for outputting an AC voltage, and the controller (204) is used for changing the AC voltage, the control method, **characterized by**:
determining whether the AC voltage is lower than an AC voltage target value;
determining whether the DC voltage is lower than a predetermined DC voltage value when the AC voltage is lower than the AC voltage target value; and
executing a corresponding operation according to a determination result.

5. The control method of claim 4, further **characterized in that** executing the corresponding operation according to the determination result comprises:
increasing the AC voltage when the DC voltage is greater than the predetermined DC voltage value; and
determining whether the AC voltage is lower than the AC voltage target value.

6. The control method of claim 4, further **characterized in that** executing the corresponding operation according to the determination result comprises: stopping increasing the AC voltage.

7. The control method of claim 6, further **characterized by**:
making the inverter (202) output a previous or a previous two value of the AC voltage.

8. The control method of claim 4, further **characterized in that** the predetermined DC voltage value is 0.75-0.8 times an open-circuited voltage of the solar panel (206).

9. The control method of claim 4, further **characterized by**:
the controller (204) turning off the inverter (202) when the DC voltage is lower than a predetermined value.

10. The control method of claim 9, further **characterized by**:
the controller (204) turning on the inverter (202) again after a predetermined time.

11. The control method of claim 4, further **characterized in that** an increment of the AC voltage is 0.3V-0.8V per time.
